# EUROPEAN PATENT APPLICATION

(11) **EP 3 620 939 A1**
(43) Date of publication of application: **11.03.2020**
(21) Application number: 19176058.6
(22) Date of filing: 23.05.2019
(51) Int. Cl.: G06F 17/28, G06F 17/27, G10L 15/18, G06N 20/00, G10L 13/00

(54) **METHOD AND DEVICE FOR SIMULTANEOUS INTERPRETATION BASED ON MACHINE LEARNING**

(30) Priority: 05.09.2018 CN 201811030459
(71) Applicant: Manjinba (Shenzhen) Technology Co., Ltd., Shenzhen (CN)
(72) Inventor: LIANG, Zhijun, Futian District Shenzhen (CN)
(74) Representative: Sun, Yiming

(57) **Abstract**

The present application discloses a method and device for simultaneous interpretation based on machine learning, wherein the method for simultaneous interpretation based on machine learning comprises: collecting a speech content and a speech feature of a target person's speech; using a machine to learn and imitate the speech feature of the target person; translating the speech content of the target person into a speech content of a specified language; and outputting, in the specified language, a speech content having the target person's speech feature imitated by the machine, wherein the language of the target person and the specified language are different languages. The technical solution of the present application could automatically identify and translate, output the translation result in the target person's speech feature, so that the translation result is more realistic, which is advantageous to improve the user experience.

## Description

### FIELD OF THE INVENTION

The present application relates to the technical field of data processing, and more particularly, to a method and device for simultaneous interpretation based on machine learning.

### BACKGROUND OF THE INVENTION

Simultaneous interpretation means to translate the speaker's language into a different language while the speaker is speaking. The simultaneous interpretation of the prior art is mostly implemented by artificial way, however, the simultaneous interpretation implemented by artificial way often needs high requirements for translators, which leads to the scarcity of these talents. At present, more and more occasions, such as international conferences, need simultaneous interpretation, and implementing simultaneous interpretation by artificial way cannot meet the needs of the market. In recent years, there are also some translation products on the market, such as translation machine, and the speech could be translated into various languages by the translation machine, but the translation time is long and the output machine language is rigid, resulting in poor user experience.

In view of this, it is necessary to propose further improvements to the current simultaneous interpretation method.

### SUMMARY OF THE INVENTION

In order to solve at least one of the above technical problems, the present application provides a method and device for simultaneous interpretation based on machine learning.

In order to achieve the above object, one technical solution adopted by the present application is to provide a method for simultaneous interpretation based on machine learning, comprising:
collecting a speech content and a speech feature of a target person's speech;
using a machine to learn and imitate the speech feature of the target person;
translating the speech content of the target person into a speech content of a specified language; and
outputting, in the specified language, a speech content having the target person's speech feature imitated by the machine, wherein the language of the target person and the specified language are different languages.

Wherein, the step of using a machine to learn and imitate the speech feature of the target person comprises:
disassembling the speech content of the target person into a plurality of phrases and/or words;
identifying and storing a pronunciation feature of each phrase and/or word of the target person's speech;
using the machine to learn and imitate the target person's pronunciation feature of the phrases and/or words.

Wherein, the pronunciation feature comprises timbre data and tone data of the target person's speech.

Wherein, the step of disassembling the speech content of the target person into a plurality of phrases and/or words comprises:
selecting at least one key phrase and/or word from a plurality of phrases and/or words;
determining a speech context of the target person according to the selected key phrase and/or word and the tone data thereof;
the step of using the machine to learn and imitate the target person's pronunciation feature of the phrases and/or words comprises,
finding a transliteration context fitting with the speech context of the target person from a database;
using the machine to learn and imitate the target person's pronunciation feature of the phrases and/or words based on the transliteration context.

Wherein, before the step of collecting a speech content and a speech feature of a target person's speech, the method comprises,
acquiring a language information of an interlocutor's speech and identifying a speech language of the interlocutor;
the step of outputting, in the specified language, a speech content having the target person's speech feature imitated by the machine comprises,
automatically matching and outputting, in the language spoken by the interlocutor, the speech content having the target person's speech feature imitated by the machine.

Wherein, the step of outputting, in the specified language, a speech content having the target person's speech feature imitated by the machine comprises:
responding to a user's language switching operation;
outputting, in a switched language, the speech content having the target person's speech feature imitated by the machine.

In order to achieve the above object, another technical solution adopted by the present application is to provide a device for simultaneous interpretation based on machine learning, comprising:
a collecting module, for collecting a speech content and a speech feature of a target person's speech;
a learning module, for using a machine to learn and imitate the speech feature of the target person;
a translation module, for translating the speech content of the target person into a speech content of a specified language; and
an output module, for outputting, in the specified language, a speech content having the target person's speech feature imitated by the machine, wherein the language of the target person and the specified language are different languages.

Wherein, the learning module comprises:
a disassembling unit, for disassembling the speech content of the target person into a plurality of phrases and/or words;
an identifying unit, for identifying and storing a pronunciation feature of each phrase and/or word of the target person's speech;
a learning unit, for using the machine to learn and imitate the target person's pronunciation feature of the phrases and/or words.

Wherein, the output module is further for,
responding to a user's language switching operation;
outputting, in a switched language, the speech content having the target person's speech feature imitated by the machine.

Wherein, the device for simultaneous interpretation based on machine learning is implemented by a smartphone, a computer, a PAD and a smart speaker.

The technical solutions of the present application mainly comprises: collecting the speech content and speech feature of the target person; using the machine to learn and imitate the speech feature of the target person; translating the speech content of the target person into the speech content of the specified language; and outputting, in the specified language, the speech content having the target person's speech feature imitated by the machine. Different from the prior art which has the problem of high cost when adopting the simultaneous interpretation and has the problem of long translation time when using the translation machine to translate, the present solution collects the speech content of the target person, and on one hand, translates the speech content into the specified language, and on the other hand, acquires the speech feature of the target person, and uses the machine to learn the target person's speech feature, realizes outputting, in the specified language, the speech content having the target person's speech feature imitated by the machine, so the present solution could output the translation result having the target person's speech feature, so that the translation result is more realistic, providing a better listening experience for user.

### BRIEF DESCRIPTION OF THE DRAWINGS

FIG. 1 is a flow chart of a method for simultaneous interpretation based on machine learning according to an embodiment of the present application;
FIG. 2 is a specific flowchart of step S20 of the present application;
FIG. 3 a module block diagram of a device for simultaneous interpretation based on machine learning according to an embodiment of the present application;
FIG. 4 is a block diagram of a learning module of the present application.

The implementation of the aim, functional features and advantages of the present application will be further described in conjunction with the embodiments and with the reference to the accompanying drawing.

### DESCRIPTION OF THE EMBODIMENTS

The technical solutions in the embodiments of the present application are clearly and completely described in the following with reference to the accompanying drawings in the embodiments of the present application, obviously, the described embodiments are a part of the embodiments of the present application, and not all of the embodiments. All other embodiments obtained by person skilled in the art based on the embodiments of the present application without creative work should fall into the protection scope of the present application.

It should be noted that, the descriptions of "first", "second" and the like in the present application are only for the description purpose, and are not to be construed as indicating or implying their relative importance or implicitly indicating the number of technical features indicated. Thus, the features defined by "first", "second" may explicitly or implicitly comprise at least one of the features. In addition, the technical solutions of various embodiments may be combined with each other, but must be based on that person skilled in the art could realize, and when a combination of the technical solutions is contradictory or impossible to be implemented, it should be considered that the combination of the technical solutions does not exist, and does not fall into the protection scope claimed by the present application.

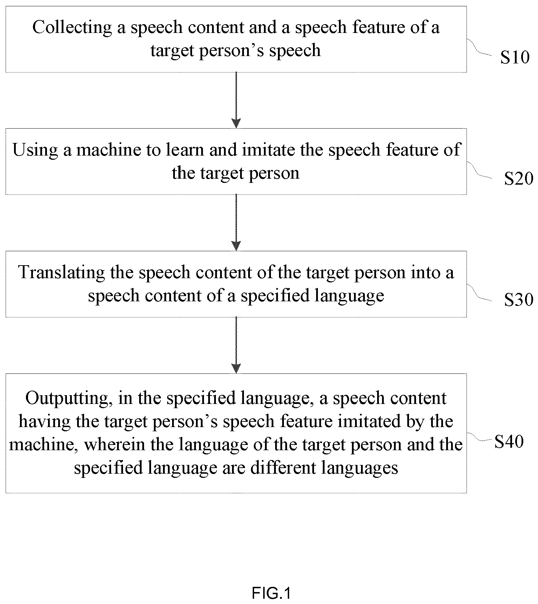

Referring to FIG. 1, FIG. 1 is a flow chart of a method for simultaneous interpretation based on machine learning according to an embodiment of the present application. In the embodiment of the present application, the method for simultaneous interpretation based on machine learning comprises:
Step S10, collecting a speech content and a speech feature of a target person's speech;
Step S20, using a machine to learn and imitate the speech feature of the target person;
Step S30, translating the speech content of the target person into a speech content of a specified language; and
Step S40, outputting, in the specified language, a speech content having the target person's speech feature imitated by the machine, wherein the language of the target person and the specified language are different languages.

In the present embodiment, while collecting the speech of the target person, the speech of the interlocutor could also be collected. The language of the target person and the interlocutor are different languages. The speech content is a language and character feature of the target person, and the speech feature is a voice feature. Use a machine to learn and imitate the speech feature of the target person, so as to make the translation result have the voice feature of the target person, rather than other voices built into a robot. The target person's speech content could be translated into the speech content of the specified language by machine, and combine with that the machine learns and imitates the target person's speech feature, so as to output the translation result having the target person's speech feature, so that the translation result is more realistic, providing a better listening experience for user.

The present solution collects the speech content and speech feature of the target person; uses the machine to learn and imitate the speech feature of the target person; translates the speech content of the target person into the speech content of the specified language; and outputs, in the specified language, the speech content having the target person's speech feature imitated by the machine. Different from the prior art which has the problem of high cost when adopting the simultaneous interpretation and has the problem of long translation time when using the translation machine to translate, the present solution collects the speech content of the target person, and on one hand, translates the speech content into the specified language, and on the other hand, acquires the speech feature of the target person, and uses the machine to learn the target person's speech feature, realizes outputting, in the specified language, the speech content having the target person's speech feature imitated by the machine, so the present solution could output the translation result having the target person's speech feature, so that the translation result is more realistic, providing a better listening experience for user.

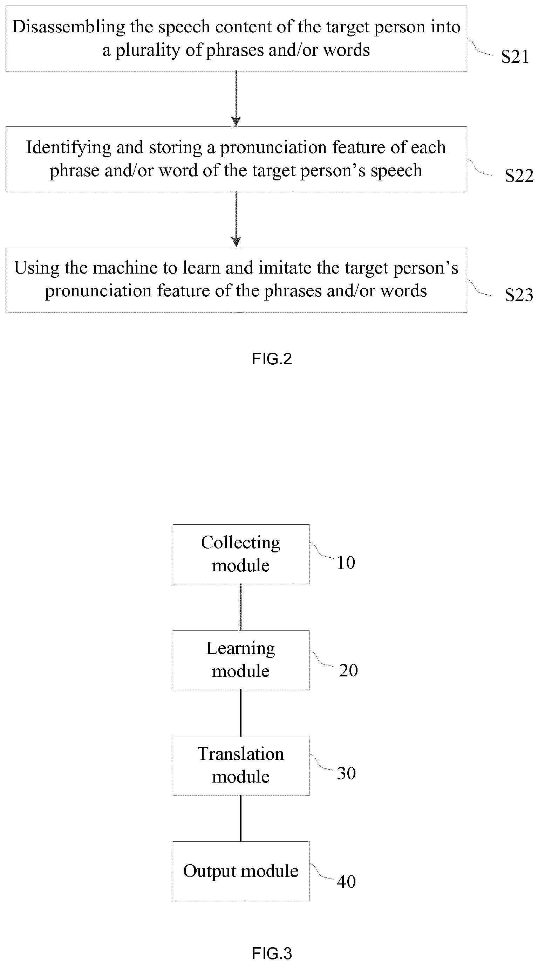

Referring to FIG. 2, FIG. 2 is a specific flowchart of step S20 of the present application. In an embodiment, the step of using a machine to learn and imitate the speech feature of the target person comprises:
Step S21, disassembling the speech content of the target person into a plurality of phrases and/or words;
Step S22, identifying and storing a pronunciation feature of each phrase and/or word of the target person's speech;
Step S23, using the machine to learn and imitate the target person's pronunciation feature of the phrases and/or words.

In the present embodiment, the collected speech content could be disassembled into a plurality of phrases, a plurality of words or combinations of a plurality of phrases and words, and the target person's speech content could be accurately identified by a plurality of phrases, a plurality of words or combinations of a plurality of phrases and words, so as to facilitate subsequent translation result. After the speech content is identified, learn and imitate the target person's pronunciation feature. Further, the pronunciation feature comprises timbre data and tone data of the target person's speech, and thus, the translation result outputted by the machine is a different language having the target person's speech feature.

In an embodiment, the step of disassembling the speech content of the target person into a plurality of phrases and/or words comprises:
selecting at least one key phrase and/or word from a plurality of phrases and/or words;
determining a speech context of the target person according to the selected key phrase and/or word and the tone data thereof;
the step of using the machine to learn and imitate the target person's pronunciation feature of the phrases and/or words comprises,
finding a transliteration context fitting with the speech context of the target person from a database;
using the machine to learn and imitate the target person's pronunciation feature of the phrases and/or words based on the transliteration context.

Further, the speech context of the target person could be determined according to the pronunciation feature of the speech content, and then accurately identify the speech content by the speech context and a plurality of phrases, a plurality of words or a combination of a plurality of phrases and words. After determining the target person's speech context, the target context in the database could also be automatically matched, and the target context is the transliteration context identified by the machine, and combine with the transliteration context, so as to accurately identify and translate the interpretation of the same word in different contexts.

In an embodiment, before the step of collecting a speech content and a speech feature of a target person's speech, the method comprises,
acquiring a language information of an interlocutor's speech and identifying a speech language of the interlocutor;
the step of outputting, in the specified language, a speech content having the target person's speech feature imitated by the machine comprises,
automatically matching and outputting, in the language spoken by the interlocutor, the speech content having the target person's speech feature imitated by the machine.

In the present embodiment, acquire the language information of the interlocutor's speech and identify the speech language of the interlocutor, and the speech language of the conversation person could be used as the specified language, and the speech language of the target person is the language to be translated, and the language to be translated could be directly translated by the machine, and could be directly translated into the specified language without manual operation.

In an embodiment, the step of outputting, in the specified language, a speech content having the target person's speech feature imitated by the machine comprises:
responding to a user's language switching operation;
outputting, in a switched language, the speech content having the target person's speech feature imitated by the machine.

In the present embodiment, the target person's speech content could also be translated into other languages by manual switching, and could be translated into one kind or multiple kinds of languages to meet the user's needs.

Referring to FIG. 3, FIG. 3 is a module block diagram of a device for simultaneous interpretation based on machine learning according to an embodiment of the present application. In the embodiment of the present application, the device for simultaneous interpretation based on machine learning comprises:
a collecting module 10, for collecting a speech content and a speech feature of a target person's speech;
a learning module 20, for using a machine to learn and imitate the speech feature of the target person;
a translation module 30, for translating the speech content of the target person into a speech content of a specified language; and
an output module 40, for outputting, in the specified language, a speech content having the target person's speech feature imitated by the machine, wherein the language of the target person and the specified language are different languages.

In the present embodiment, the collecting module 10 collects the speech of the interlocutor while collecting the speech of the target person. The language of the target person and the interlocutor are different languages. The speech content is a language and character feature of the target person, and the speech feature is a voice feature. The machine can learn and imitate the speech feature of the target person through the learning module 20, so as to make the translation result have the voice feature of the target person, rather than other voices built into a robot. The translation module 30 can translate the speech content of the target person into the speech content of the specified language by machine, and combine with that the machine learns and imitates the target person's speech feature, so that the output module 40 could output the translation result having the target person's speech feature, so that the translation result is more realistic, providing a better listening experience for user.

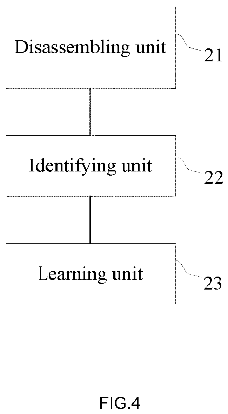

Referring to FIG. 4, FIG. 4 is a block diagram of a learning module 20 of the present application. In an embodiment, the learning module 20 specifically comprises:
a disassembling unit 21, for disassembling the speech content of the target person into a plurality of phrases and/or words;
an identifying unit 22, for identifying and storing a pronunciation feature of each phrase and/or word of the target person's speech;
a learning unit 23, for using the machine to learn and imitate the target person's pronunciation feature of the phrases and/or words.

In the present embodiment, the disassembling unit 21 disassembles the collected speech content into a plurality of phrases, a plurality of words or combinations of a plurality of phrases and words, and the identifying unit 22 could accurately identify the speech content of the target person by a plurality of phrases, a plurality of words or combinations of a plurality of phrases and words, so as to facilitate subsequent translation result. After the speech content is identified, the learning unit 23 learns and imitates the target person's pronunciation feature. Further, the pronunciation feature comprises timbre data and tone data of the target person's speech, and thus, the translation result outputted by the machine is a different language having the target person's speech feature.

In an embodiment, the output module 40 is further used for,
responding to a user's language switching operation;
outputting, in a switched language, the speech content having the target person's speech feature imitated by the machine.

In the present embodiment, the output module 40 could respond to the user's language switching operation, to translate the identified speech content having the target person's speech feature into one or more languages.

In an embodiment, the device for simultaneous interpretation based on machine learning is implemented by a smartphone, a computer, a PAD and a smart speaker. It could be understood that, in addition to the above devices, the present device could be integrated into other digital products to facilitate user's use.

The above description is only the preferred embodiments of the present application, and is not intended to limit the scope of the present application, and within the inventive concept of the present application, any equivalent structural transformations made by the specification and the accompanying drawings of the present application, or direct/indirect applications in the other related technical field, should all be comprised in the protection scope of the present application.

## Claims

1. A method for simultaneous interpretation based on machine learning, **characterized in that** the method for simultaneous interpretation based on machine learning comprises:
collecting a speech content and a speech feature of a target person's speech;
using a machine to learn and imitate the speech feature of the target person;
translating the speech content of the target person into a speech content of a specified language; and
outputting, in the specified language, a speech content having the target person's speech feature imitated by the machine, wherein the language of the target person and the specified language are different languages.

2. The method for simultaneous interpretation based on machine learning according to claim 1, wherein the step of using a machine to learn and imitate the speech feature of the target person comprises:
disassembling the speech content of the target person into a plurality of phrases and/or words;
identifying and storing a pronunciation feature of each phrase and/or word of the target person's speech;
using the machine to learn and imitate the target person's pronunciation feature of the phrases and/or words.

3. The method for simultaneous interpretation based on machine learning according to claim 2, wherein the pronunciation feature comprises timbre data and tone data of the target person's speech.

4. The method for simultaneous interpretation based on machine learning according to claim 3, wherein the step of disassembling the speech content of the target person into a plurality of phrases and/or words comprises:
selecting at least one key phrase and/or word from a plurality of phrases and/or words;
determining a speech context of the target person according to the selected key phrase and/or word and the tone data thereof;
the step of using the machine to learn and imitate the target person's pronunciation feature of the phrases and/or words comprises,
finding a transliteration context fitting with the speech context of the target person from a database;
using the machine to learn and imitate the target person's pronunciation feature of the phrases and/or words based on the transliteration context.

5. The method for simultaneous interpretation based on machine learning according to claim 1, wherein before the step of collecting a speech content and a speech feature of a target person's speech, the method comprises,
acquiring a language information of an interlocutor's speech and identifying a speech language of the interlocutor;
the step of outputting, in the specified language, a speech content having the target person's speech feature imitated by the machine comprises,
automatically matching and outputting, in the language spoken by the interlocutor, the speech content having the target person's speech feature imitated by the machine.

6. The method for simultaneous interpretation based on machine learning according to claim 1, wherein the step of outputting, in the specified language, a speech content having the target person's speech feature imitated by the machine comprises:
responding to a user's language switching operation;
outputting, in a switched language, the speech content having the target person's speech feature imitated by the machine.

7. A device for simultaneous interpretation based on machine learning, **characterized in that** the device for simultaneous interpretation based on machine learning comprises:
a collecting module, for collecting a speech content and a speech feature of a target person's speech;
a learning module, for using a machine to learn and imitate the speech feature of the target person;
a translation module, for translating the speech content of the target person into a speech content of a specified language; and
an output module, for outputting, in the specified language, a speech content having the target person's speech feature imitated by the machine, wherein the language of the target person and the specified language are different languages.

8. The device for simultaneous interpretation based on machine learning according to claim 7, wherein the learning module comprises:
a disassembling unit, for disassembling the speech content of the target person into a plurality of phrases and/or words;
an identifying unit, for identifying and storing a pronunciation feature of each phrase and/or word of the target person's speech;
a learning unit, for using the machine to learn and imitate the target person's pronunciation feature of the phrases and/or words.

9. The device for simultaneous interpretation based on machine learning according to claim 7, wherein the output module is further for,
responding to a user's language switching operation;
outputting, in a switched language, the speech content having the target person's speech feature imitated by the machine.

10. The device for simultaneous interpretation based on machine learning according to claim 7, wherein the device for simultaneous interpretation based on machine learning is implemented by a smartphone, a computer, a PAD and a smart speaker.
